# EUROPÄISCHE PATENTANMELDUNG

(11) **EP 0 917 100 A2**
(43) Veröffentlichungstag der Anmeldung: **19.05.1999**
(21) Anmeldenummer: 98120326.8
(22) Anmeldetag: 27.10.1998
(51) Int. Cl.: G06K 19/077

(54) **Verfahren zum Herstellen eines flachen Kartengrundkörpers für eine Chipkarte**

(30) Priorität: 13.11.1997 DE 19750344
(71) Anmelder: ODS Landis & Gyr GmbH & Co. KG, 85375 Neufahrn (DE)
(72) Erfinder: Schmidt, Frank Dr., 99846 Seebach (DE)
(74) Vertreter: Grünecker, Kinkeldey, Stockmair & Schwanhäusser Anwaltssozietät

(57) **Zusammenfassung**

Ein Verfahren zum Herstellen eines flachen Kartengrundkörpers für eine Chipkarte, der eine Oberseite, eine Unterseite und einen umlaufenden Rand aufweist, bei dem über einen Anguß Kunststoffmaterial in eine Spritzgußform eingespritzt, der Kartengrundkörper aus der Spritzgußform entnommen und nachfolgend der Anguß entfernt wird, soll verbessert werden. Insbesondere soll ein großes Spektrum an verschiedenen Kunststoffen einsetzbar sein. Hierzu wird das Einspritzen über einen Anguß an der Ober- und/oder Unterseite des Kartengrundkörpers durchgeführt.

## Beschreibung

Die vorliegende Erfindung bezieht sich auf ein Verfahren zum Herstellen eines flachen Kartengrundkörpers für eine Chipkarte, der eine Oberseite, eine Unterseite und einen umlaufenden Rand aufweist, bei dem über einen Anguß Kunststoffmaterial in eine Spritzgußform eingespritzt, der Kartengrundkörper aus der Spritzgußform entnommen und nachfolgend der Anguß entfernt wird.

Aufgrund steigenden Kostendruckes werden Kartengrundkörper für Chipkarten immer häufiger durch Spritzgußverfahren hergestellt. Durch verbesserte Drucktechniken verdrängen derartige Chipkarten immer mehr die aufwendiger herzustellenden Laminatkarten. Hauptsächlich werden zwei verschiedene Herstellungsverfahren für spritzgegossene Kartengrundkörper eingesetzt.

Zum einen erfolgt das Spritzen der Kartengrundkörper über einen zentralen Anguß, der sich dann in mehrere Filmangüsse aufteilt, wobei jeweils ein Filmanguß einem Kartengrundkörper zugeordnet ist. Der Filmanguß weist jeweils einen Vorwall zur Abnahme des kalten Pfropfens auf und ist seitlich an den umlaufenden Rand des Kartengrundkörpers herangeführt. Gleichzeitig wird bei dem Spritzgießverfahren eine, in eine Trägeraussparung und eine Kappenaussparung unterteilte Modulaussparung in die Oberfläche des Kartengrundkörpers mit eingeformt. Anschließend erfolgt nach der Entnahme des Kartengrundkörpers aus der Spritzgußmaschine das Abstanzen des zentralen Angusses. Problematisch ist bei diesem Verfahren das Ausbilden der Kappenvertiefung beim Spritzgießen, da hier eine relativ dünne Restwanddicke stehen bleibt. Aus diesem Grunde sind diesem Verfahren Grenzen in der Auswahl möglicher Massenkunststoffe gesetzt, da von den einzusetzenden Kunststoffen eine hohe Fließfreudigkeit erwartet wird.

Das zweite bekannte Verfahren sieht ein separates Spritzen der Kartengrundkörper mit jeweils einem seitlich an den umlaufenden Rand herangeführten Filmanguß vor. Eine Besonderheit dieses Verfahrens besteht darin, daß die Kappenaussparung in der Modulaussparung nicht bereits während des Spritzgußvorganges eingeformt, sondern nachträglich durch einen Prägeprozeß ausgebildet wird. Hierdurch läßt sich bereits ein größeres Kunststoffspektrum zum Herstellen des Kartengrundkörpers einsetzen, da extrem dünne Wandbereiche beim Spritzgußvorgang vermieden werden. Die Filmangüsse werden nach der Entnahme aus der Spritzgußmaschine abgestanzt und der Stanzgrad mittels eines Messerschnittsystems abgeschnitten.

Des weiteren besteht bei derartig gespritzten Kartengrundkörpern ein Problem in der Ausbildung von Fließnähten in Spritzrichtung durch ausgekühlte Kunststoffzonen, die zu einem Vorzugsbruch in Längsrichtung führen können. Diese Tatsache beruht auf der quasi eindimensionalen Ausrichtung unterkühlter Kunststoffmolekülketten. Die oben erwähnten Verfahren wurden hinsichtlich der Materialauswahl und der Ausgestaltung der Angüsse schon weitestgehend zur Vermeidung von Fließnähten optimiert. Jedoch besteht weiterhin das Bedürfnis, eine Qualitätssteigerung zu erreichen.

Ein weiterer Nachteil der vorangegangenen Verfahren besteht darin, daß eine relativ große Menge an Kunststoff durch das Abstanzen der Angüsse anfällt, die in den Rohstoffkreislauf zurückgeführt werden muß. Diese in bezug auf den jeweils gespritzten Kartengrundkörper anfallenden Abfallstücke müssen entsprechend zusätzlich bei jedem Spritzgußzyklus erwärmt werden, was mit entsprechendem Kostenaufwand verbunden ist.

Es ist daher die Aufgabe der vorliegenden Erfindung, ein verbessertes Verfahren zum Herstellen eines flachen Kartengrundkörpers für eine Chipkarte der eingangs genannten Art bereitzustellen, das den Einsatz vielfältiger Massenkunststoffe bei zusätzlicher Qualitätsverbesserung zuläßt.

Diese Aufgabe wird erfindungsgemäß dadurch gelöst, daß das Einspritzen über einen Anguß an der Ober- und/oder Unterseite des Kartengrundkörpers erfolgt.

Die Erfindung beschreitet also einen gänzlich anderen Weg, in dem das Einspritzen des Kunststoffes nicht über den Randbereich, sondern direkt über die Ober- und/oder Unterseite des Kartengrundkörpers erfolgt. Hierdurch erfolgt die Verteilung des Kunststoffes von einem Punkt im Inneren des Kartengrundkörpers aus zu den Randbereichen hin. Das Ausbilden von Fließnähten wird durch diesen Vorgang weitgehendst unterdrückt, wodurch auch bislang nicht verwendbare Kunststoffe eingesetzt werden können. Ein weiterer Vorteil besteht in dem Wegfall eines Filmangusses, da dieser eine weitere Schikane darstellte, der den Einsatz einiger Kunststoffe unmöglich machte. Dadurch, daß kein Filmanguß ausgebildet werden muß, besteht auch die Möglichkeit, den Anguß so klein wie nur irgend möglich auszuführen, da entsprechender Platzbedarf für den Filmanguß nicht vorhanden ist.

Aus diesem Grunde ist es gemäß einer Ausführungsform vorgesehen, daß das Einspritzen des Kunststoffmaterials über einen kleinen Angußpunkt erfolgt. Da der Anguß bevorzugt senkrecht zur Ober- und/oder Unterseite des Kartengrundkörpers erfolgen wird, stellt eine derartige kleine Ausbildung des Angusses als Angußpunkt keine allzugroßen Anforderungen an die Vorrichtung.

Da die Ober- und/oder Unterseite des Kartengrundkörpers in einem weiteren Verfahren bedruckt wird, müssen jegliche Höhenschwankungen an den Druckoberflächen ausgeschlossen sein. Aus diesem Grunde kann vorteilhafterweise das Einspritzen des Kunststoffmaterials über einen Anguß innerhalb einer Vertiefung in der Ober- und/oder Unterseite des Kartengrundkörpers erfolgen. Hierzu bieten sich je nach Kartentyp Vertiefungen für die unterschiedlichsten Zwecke an.

Günstigerweise kann die Höhe des Angußpunktes gleich oder geringer ausgeführt werden wie oder als die Tiefe der Vertiefung. Hierdurch entsteht ein Kartengrundkörper-Rohling, bei dem keine Bestandteile über die durch den umlaufenden Rand und die Ober- und/oder Unterseite vorgegebenen Außenabmessungen überstehen. Insofern muß auch keine Nachbearbeitung zur Beseitigung des Angusses im Außenbereich der Karte erfolgen.

Die einfachste Verfahrensvariante, durch die ein Kartengrundkörper mit einer Modulaussparung für das spätere Einsetzen des Chipmoduls versehen wird, sieht vor, das Einspritzen über den Anguß im Bereich der Modulaussparung vorzusehen. Hierdurch wird sichergestellt, daß der Anguß an keiner Stelle erfolgt, die bei der später fertigen Chipkarte sichtbar ist. Selbst das nachträgliche Abtrennen eines Filmangusses, wie es bislang im Stand der Technik üblich war, hatte Qualitätseinbußen an dem umlaufenden Randbereich zur Folge. Hierdurch ist ein Verfahren geschaffen, durch das der Anguß an einer Stelle angeordnet ist, die später durch das Chipmodul abgedeckt ist.

Bei einer weiteren Verfahrensvariante, durch die der fertige Kartengrundkörper eine mehrstufige Modulaussparung erhält, die unterteilt ist in eine flache Trägeraussparung und eine tiefere Kappenaussparung, kann das Einspritzen über den Anguß vorteilhafterweise im Bereich der Trägeraussparung erfolgen. Hierdurch ist sichergestellt, daß in diesem Bereich eine ausreichende Restdicke des Kartengrundkörpers erhalten bleibt, so daß weiterhin eine große Anzahl an Kunststoffen eingesetzt werden kann.

Es gibt aber auch in diesem Zusammenhang die Möglichkeit, das Einspritzen über den Anguß im Bereich der Kappenaussparung vorzunehmen. Hierdurch erfolgt das Einspritzen zumeist mittig zur Modulaussparung und führt zu einer gleichmäßigeren Verteilung des Kunststoffes. Allerdings muß in diesem Bereich die verbleibende Restwanddicke beachtet werden. Diese darf nicht zu dünn werden, wenn weiterhin eine große Anzahl unterschiedlicher Kunststoffe Verwendung finden soll. Es ist aber auch möglich, die endgültige Ausformung der Kappenaussparung nach dem Spritzgießen vorzunehmen.

Obwohl es durch die Einspritzrichtung gemäß der vorliegenden Erfindung möglich ist, praktisch ohne Anguß auszukommen, ist weiter vorgesehen, daß der Anguß nach dem Spritzgießen spanabhebend entfernt wird. In diesem Zusammenhang ist es von besonderem Interesse, wenn gemäß einer weiteren Variante der Anguß durch das Einformen einer Modulaussparung oder eines Bereiches davon entfernt wird. Hierdurch ist es möglich, den Kartengrundkörper im Bereich der Modulaussparung vorerst mit einer dickeren Wandstärke durch Spritzgießen herzustellen, so daß es nicht zu Bedingungen wie bei einem Filmanguß kommt. Die nachträgliche Reduktion der Wandstärke kann durch anschließendes Nachbearbeiten des entsprechenden Bereiches geschehen. Dieser zusätzliche Bearbeitungsschritt stellt keinen Nachteil zu bislang bekannten Verfahren dar, weil hierdurch gleichzeitig der Anguß entfernt wird, was bereits im Stand der Technik geschehen mußte.

Günstigerweise kann der Anguß beim Ausformen einer Kappenaussparung nach dem Spritzgießen entfernt werden. Es bietet sich demnach an, einen Kartengrundkörper zu spritzen, der bereits eine vorgeformte Modulaussparung mit z.B. der Tiefe der Trägeraussparung aufweist. Die tiefere Kappenaussparung wird dann durch Beseitigen des Angusses gleichzeitig eingeformt. Da dieser Vorgang nach dem Spritzgießen erfolgt, hat auch die dann erzeugte dünne Wandung keinen Einfluß auf die Auswahl des Kunststoffes. Der Vollständigkeit halber sei an dieser Stelle erwähnt, daß die Trägeraussparung zur Befestigung und Aufnahme des Trägersubstrates und die Kappenaussparung zur Aufnahme und Anbringung der auf dem Trägersubstrat angeordneten Verkappung einschließlich Mikrochip dient.

Besonders kleine Angußpunkte können durch ein Nadelverschluß-Heißkanalangießen erzeugt werden. Die Größe des Angußpunktes wird lediglich durch den Verschlußhub der Nadel vorgegeben und kann äußerst klein ausfallen.

Günstigerweise kann der Angußpunkt auch durch ein Punktangießen erfolgen. Dieses bekannte Verfahren läßt sich durch die um ca. 90° gedrehte Einspritzrichtung, wie sie gemäß der vorliegenden Erfindung erfolgen kann, anwenden. Ein Filmanguß zur Unterdrückung von Fließnähten ist nicht erforderlich.

Des weiteren bezieht sich die Erfindung auf eine Vorrichtung zum Spritzgießen eines Kartengrundkörpers für eine Chipkarte nach einem Verfahren gemäß einem der Ansprüche 1 bis 12, die eine Spritzgußform mit mindestens einem Formnest für den Kartengrundkörper und einen dem jeweiligen Formnest zugeordneten Angußkanal zum Zuführen des Kunststoffmaterials aufweist. Diese Vorrichtung zeichnet sich insbesondere dadurch aus, daß der Angußkanal an einer Stelle in das Formnest mündet, die einer Ober- und/oder Unterseite des zu formenden Kartengrundkörpers zugeordnet ist. Insgesamt kann die Vorrichtung wesentlich einfacher ausfallen, da auf aufwendig hergestellte Filmangüsse verzichtet werden kann. Die Zuführung des Kunststoffes kann über eine Serienspritzmaschine erfolgen. Es erfolgt die direkte Einbringung des Kunststoffes aus dem Heißkanal in die Formnester, ohne Zwischenschaltung eines Filmangusses. Speziell ausgebildete Heißkanaldüsen Spritzen kartenzentral den Kunststoff ein, so daß dieser sich von der Mitte der Karte nach außen im Formnest verteilt.

Vorteilhafterweise kann die Spritzgußform im Bereich des Formnestes jeweils eine Erhöhung zum Ausformen einer Modulaussparung aufweisen und der Angußkanal im Bereich dieser Erhöhung münden. Hierdurch wird sichergestellt, daß der Anguß innerhalb der Kartenumgrenzung erfolgt, wodurch es ein leichtes ist, daß auch der zurückverbleibende Anguß innerhalb dieser Grenzen verbleibt und nicht über die Kartenoberflächen übersteht.

Bevorzugt kann der Angußkanal eine Nadelverschluß-Heißkanaleinrichtung aufweisen. Durch den Nadelverschluß kann ein punktgenauer und sehr kleiner Anguß ausgestaltet werden. In ähnlicher Weise kann der Angußkanal auch eine Punktangußeinrichtung aufweisen, die ebenfalls für eine Ausbildung eines sehr kleinen Angusses sorgt.

In einer weiteren Ausführungsform ist vorgesehen, daß umlaufend um jedes Formnest Kanäle mit Entlüftungsschlitzen angeordnet sind, die für die geeignete Abführung der Luft beim Spritzgußvorgang sorgen.

Darüber hinaus bezieht sich die Erfindung auf einen Kartengrundkörper-Rohling für eine Chipkarte, der nach einem Verfahren nach einem der Ansprüche 1 bis 12 hergestellt ist. Dieser zeichnet sich dadurch aus, daß ein Anguß an der Ober- und/oder Unterseite angeordnet ist. Ein solcher Kartengrundkörper-Rohling weist durch die günstigen Gegebenheiten beim Spritzgußvorgang keine ausgeprägten Fließnähte auf, da der Kunststoffstrom am Anguß in mehrere Richtungen auffächert.

Durch ein späteres Bearbeitungsverfahren, bei dem der Anguß entfernt wird, können insbesondere bei einem Kartengrundkörper-Rohling sämtliche Spuren des Angusses beseitigt werden, wenn dessen Anguß in einer Modulaussparung an der Ober und/oder Unterseite angeordnet ist. Ein solcher Kartengrundkörper-Rohling läßt sich so bearbeiten, daß vor dem Einbringen des Chipmoduls nicht mehr zu erkennen ist, wo das Einspritzen stattgefunden hat.

Im folgenden wird ein Ausführungsbeispiel der vorliegenden Erfindung anhand einer Zeichnung näher erläutert.

Es zeigen:
- Fig. 1: einen Kartengrundkörper in einer Vorderansicht,
- Fig. 2: einen Kartengrundkörper-Rohling zum Herstellen des Kartengrundkörpers aus Fig. 1,
- Fig. 3: einen Schnitt entlang der Linie III-III aus Fig. 2 in einer vergrößerten Darstellung und
- Fig. 4: einen Verfahrensschritt kurz nach der Fertigstellung der Modulaussparung aus Fig. 1 entlang der Linie IV-IV in Fig. 1 geschnitten und in einer vergrößerten Darstellung.

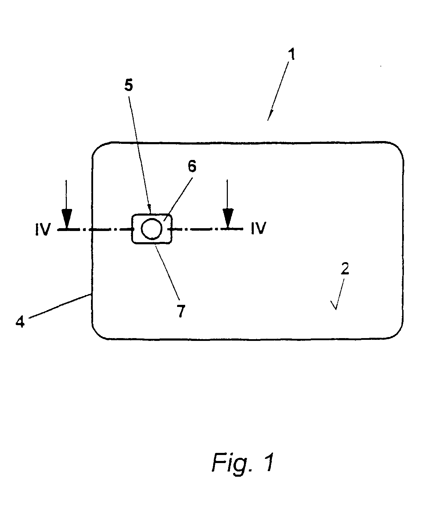

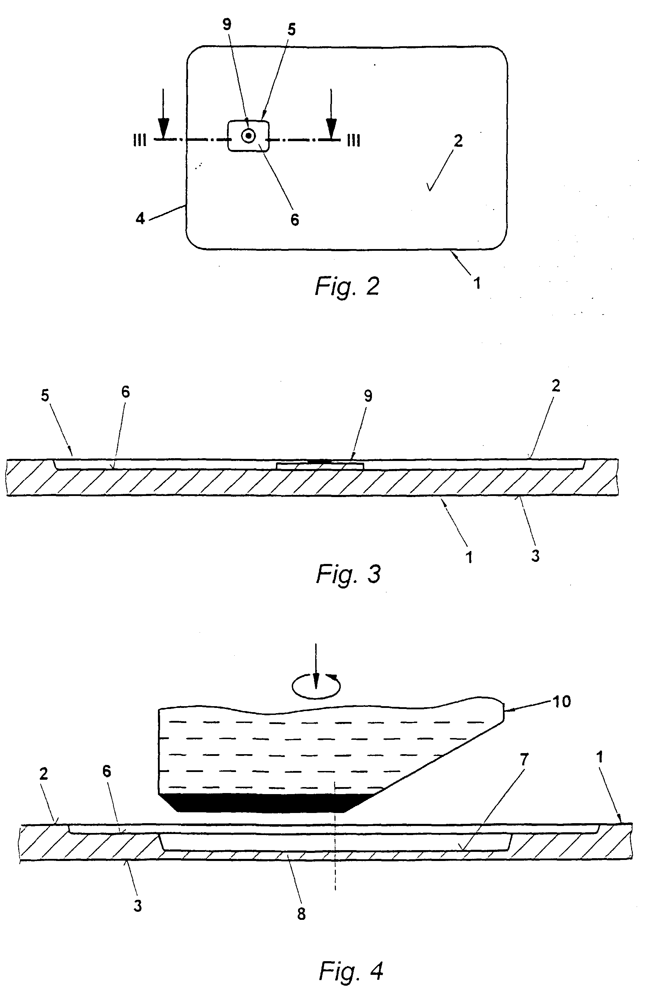

Der in Fig. 1 in Verbindung mit Fig. 4 dargestellte Kartengrundkörper 1 ist im wesentlichen rechteckplattenförmig mit einer Oberseite 2, einer Unterseite 3 und einem von vier Seitenflächen gebildeten, umlaufenden Rand 4 versehen.

Durch die Normung vorgegeben, weist die Oberseite 2 auf der linken Seite eine rechteckförmige Modulaussparung 5 auf, die aus zwei Absätzen aufgebaut ist. Der erste Absatz ist die sogenannte Trägeraussparung 6 mit einer Tiefe von 0,2 mm, gemessen von der Oberseite 2 des Kartengrundkörpers 1. Mittig zu dieser ist eine kreisförmige, tiefere Kappenaussparung 7 mit einer Tiefe von 0,6 mm vorgesehen. Bei einer Gesamtdicke des Kartengrundkörpers von 0,8 mm verbleibt somit eine Wandung 8 mit der Stärke von 0,2 mm.

Dieser Kartengrundkörper 1 wird auf der Ober- und/oder Unterseite 2, 3 bedruckt und anschließend ein nicht dargestelltes Chipmodul in die Modulaussparung 5 eingeklebt. Das Trägersubstrat des Chipmoduls kommt mit der Trägeraussparung 6 in Berührung und wird mit dieser verbunden, während die Verkappung des Mikrochips sich in der Kappenaussparung 7 befindet. Auf der der Verkappung abgewandten Seite des Trägersubstrats befinden sich die nach außen sichtbaren Kontakte.

Anhand der Fig. 2, 3 und 4 wird nun die Herstellung des Kartengrundkörpers 1 näher erläutert.

In der Fig. 2 ist ein Kartengrundkörper-Rohling dargestellt, der durch ein Spritzgußverfahren hergestellt ist. Bevorzugt werden mehrere dieser Kartengrundkörper-Rohlinge in einer Form gleichzeitig hergestellt, wobei jedem Formnest eine Nadelverschlußdüse zugeordnet ist. Das Einspritzen des Kunststoffes erfolgt senkrecht zur Oberseite 2 in die Mitte der Modulaussparung 5. Die Modulaussparung 5 wird beim Spritzgußvorgang nur auf die Tiefe der Trägeraussparung 6 ausgebildet und in ihrer Mitte verbleibt ein Angußpunkt 9, dessen Höhe geringer ist als die Tiefe der Trägeraussparung 6. Die nicht dargestellte Spritzgußform ist hierzu entsprechend ausgeformt. Dadurch, daß beim Spritzgußvorgang die Kappenaussparung 7 noch nicht hergestellt wird, verbleibt eine Restwandstärke zur Unterseite 3 von 0,6 mm. Diese Wandstärke ist größer als ein kritischer Grenzwert von ca. 400 µm, der maßgebend ist für den Einsatz oder Nichteinsatz verschiedenster Kunststoffe. Die bislang verwendeten Filmangüsse hatten immer eine geringere Querschnittshöhe, weshalb zahlreiche, insbesondere preiswerte, Kunststoffe nicht eingesetzt werden konnten. Durch das Legen des Angußpunktes 9 in die Modulaussparung 5 hinein und aufgrund der verbleibenden Restwandstärke ist es nun möglich, ein breites Spektrum zur Verfügung stehender Kunststoffe für die Herstellung von Kartengrundkörpern 1 zu verwenden. Darüber hinaus ist ein derartiges Verfahren toleranter gegenüber Qualitätsschwankungen des Ausgangsmaterials.

Anschließend wird mittels eines Bearbeitungswerkzeuges 10 die Kappenaussparung 7 in die Mitte der Modulaussparung 5 eingeformt, so daß die verbleibende Wandung 8 von der Unterseite 3 aus gemessen 0,2 mm beträgt. Als Bearbeitungswerkzeug 10 können sowohl spanabhebende Werkzeuge, wie Senker oder Fräser, als auch spanlose Werkzeuge, wie z.B. Prägestempel, verwendet werden. Gleichzeitig wird bei einem derartigen Nachbearbeitungsvorgang auch der Angußpunkt 9 gänzlich entfernt, da er sich im Bearbeitungsbereich des Werkzeuges befindet.

Das Nachbearbeiten, d.h. das Einarbeiten der Kappenaussparung 7 und Entfernen des Angußpunktes 9, kann vor oder nach dem Bedrucken der Ober- und/oder Unterseite 2, 3 des Kartengrundkörpers 1 erfolgen. Anschließend wird das Chipmodul in die Modulaussparung 5 eingesetzt und in dieser befestigt. Die Verkappung des Chipmoduls paßt sich dann formschlüssig in die Kappenaussparung 7 ein.

## Patentansprüche

1. Verfahren zum Herstellen eines flachen Kartengrundkörpers (1) für eine Chipkarte, der eine Oberseite (2), eine Unterseite (3) und einen umlaufenden Rand (4) aufweist, bei dem über einen Anguß (9) Kunststoffmaterial in eine Spritzgußform eingespritzt, der Kartengrundkörper (1) aus der Spritzgußform entnommen und nachfolgend der Anguß (9) entfernt wird, **dadurch gekennzeichnet,** daß das Einspritzen über einen Anguß (9) an der Ober- und/oder Unterseite (2, 3) des Kartengrundkörpers (1) erfolgt.

2. Verfahren nach Anspruch 1, **dadurch gekennzeichnet,** daß das Einspritzen des Kunststoffmaterials über einen kleinen Angußpunkt (9) erfolgt.

3. Verfahren nach Anspruch 1 oder 2, **dadurch gekennzeichnet,** daß das Einspritzen des Kunststoffmaterials über einen Anguß (9) innerhalb einer Vertiefung (5) in der Ober- und/oder Unterseite (2, 3) des Kartengrundkörpers (1) erfolgt.

4. Verfahren nach Anspruch 3, **dadurch gekennzeichnet,** daß die Höhe des Angußpunktes (9) gleich oder geringer ausgeführt wird, wie oder als die Tiefe der Vertiefung (5).

5. Verfahren nach einem der Ansprüche 1 bis 4, bei dem während des Spritzgießens eine Modulaussparung (5) für das spätere Einsetzen des Chipmoduls eingeformt wird, **dadurch gekennzeichnet,** daß das Einspritzen über den Anguß (9) im Bereich der Modulaussparung (5) erfolgt.

6. Verfahren nach Anspruch 5, durch das der fertigte Kartengrundkörper (1) eine mehrstufige Modulaussparung (5) erhält, die unterteilt ist in eine flache Trägeraussparung (6) und eine tiefere Kappenaussparung (7), **dadurch gekennzeichnet,** daß das Einspritzen über den Anguß (9) im Bereich der Trägeraussparung (6) erfolgt.

7. Verfahren nach Anspruch 5, durch das der fertige Kartengrundkörper (1) eine mehrstufige Modulaussparung (5) erhält, die unterteilt ist in eine flache Trägeraussparung (6) und eine tiefere Kappenaussparung (7), **dadurch gekennzeichnet,** daß das Einspritzen über den Anguß (9) im Bereich der Kappenaussparung (7) erfolgt.

8. Verfahren nach einem der Ansprüche 1 bis 7, **dadurch gekennzeichnet,** daß der Anguß (9) nach dem Spritzgießen spanabhebend entfernt wird.

9. Verfahren nach einem der Ansprüche 1 bis 8, **dadurch gekennzeichnet,** daß der Anguß (9) durch das Einformen einer Modulaussparung (5) oder eines Bereiches davon entfernt wird.

10. Verfahren nach Anspruch 9, **dadurch gekennzeichnet,** daß der Anguß (9) beim Ausformen einer Kappenaussparung (7) nach dem Spritzgießen entfernt wird.

11. Verfahren nach einem der Ansprüche 2 bis 10, **dadurch gekennzeichnet,** daß der Angußpunkt (9) durch ein Nadelverschluß-Heißkanalangießen erzeugt wird.

12. Verfahren nach einem der Ansprüche 2 bis 11, **dadurch gekennzeichnet,** daß der Angußpunkt (9) durch ein Punktangießen erzeugt wird.

13. Vorrichtung zum Spritzgießen eines Kartengrundkörpers (1) für eine Chipkarte nach einem Verfahren gemäß einem der Ansprüche 1 bis 12, die eine Spritzgußform mit mindestens einem Formnest für den Kartengrundkörper (1) und einen dem jeweiligen Formnest zugeordneten Angußkanal zum Zuführen des Kunststoffmaterials aufweist, **dadurch gekennzeichnet,** daß der Angußkanal an einer Stelle in das Formnest mündet, die einer Ober- und/oder Unterseite (2, 3) des zu formenden Kartengrundkörpers (1) zugeordnet ist.

14. Vorrichtung nach Anspruch 13, **dadurch gekennzeichnet,** daß die Spritzgußform im Bereich des Formnestes jeweils eine Erhöhung zum Ausformen einer Modulaussparung (5) aufweist und der Angußkanal im Bereich dieser Erhöhung mündet.

15. Vorrichtung nach Anspruch 13 oder 14, **dadurch gekennzeichnet,** daß der Angußkanal eine Nadelverschluß-Heißkanaleinrichtung aufweist.

16. Vorrichtung nach Anspruch 14 oder 15, **dadurch gekennzeichnet,** daß der Angußkanal eine Punktangußeinrichtung aufweist.

17. Vorrichtung nach einem der Ansprüche 14 bis 16, **dadurch gekennzeichnet,** daß umlaufend um jedes Formnest Kanäle mit Entlüftungsschlitzen angeordnet sind.

18. Kartengrundkörper-Rohling für eine Chipkarte, der durch ein Verfahren nach einem der Ansprüche 1 bis 12 hergestellt ist, **gekennzeichnet durch** einen Anguß (9) an der Ober- und/oder Unterseite (2, 3).

19. Kartengrundkörper-Rohling nach Anspruch 18, **dadurch gekennzeichnet,** daß der Anguß in einer Modulaussparung (5) in der Ober- und/oder Unterseite (2, 3) angeordnet ist.
